(19) **Europäisches Patentamt**
**European Patent Office**
**Office européen des brevets**

(11) **EP 4 500 800 B1**

(12) # EUROPEAN PATENT SPECIFICATION

(45) Date of publication and mention
of the grant of the patent:
**17.06.2026 Bulletin 2026/25**

(21) Application number: **23781582.4**

(22) Date of filing: **21.03.2023**

(51) International Patent Classification (IPC):
*H04L 9/40* *(2022.01)* *H04L 9/06* *(2006.01)*
*G06F 21/62* *(2013.01)* *H04L 9/00* *(2022.01)*
*H04L 9/32* *(2006.01)*

(52) Cooperative Patent Classification (CPC):
**H04L 9/3239; G06F 21/6245; H04L 9/008**

(86) International application number:
**PCT/US2023/015815**

(87) International publication number:
**WO 2023/192071 (05.10.2023 Gazette 2023/40)**

(54) **PRIVATE-SET INTERSECTION OF UNBALANCED DATASETS**

PRIVATER SCHNITT VON UNSYMMETRISCHEN DATENSÄTZEN

INTERSECTION D'ENSEMBLES PRIVÉS D'ENSEMBLES DE DONNÉES NON ÉQUILIBRÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.03.2022 US 202263324498 P**

(43) Date of publication of application:
**05.02.2025 Bulletin 2025/06**

(73) Proprietor: **Visa International Service Association**
**San Francisco, California 94128 (US)**

(72) Inventors:
• **BADRINARAYANAN, Saikrishna**
**San Francisco, California 94128 (US)**
• **DAS, Sourav**
**San Francisco, California 94128 (US)**
• **GARIMELLA, Gayathri Annapurna**
**San Francisco, California 94128 (US)**
• **RAGHURAMAN, Srinivasan**
**San Francisco, California 94128 (US)**
• **RINDAL, Peter Byerley**
**San Francisco, California 94128 (US)**

(74) Representative: **EIP**
**Fairfax House**
**15 Fulwood Place**
**London WC1V 6HU (GB)**

(56) References cited:
**US-A1- 2019 325 082      US-A1- 2019 378 599
US-A1- 2020 250 296      US-A1- 2021 194 856
US-B1- 10 635 824         US-B1- 10 635 824**

• **DANIEL DEMMLER ET AL: "PIR-PSI: Scaling
Private Contact Discovery", vol.
20180606:185648, 6 June 2018 (2018-06-06),
pages 1 - 28, XP061025891, Retrieved from the
Internet <URL:http://eprint.iacr.org/2018/579.
pdf> [retrieved on 20180606]**
• **ASRA ALI GOOGLE TANCR◇DE LEPOINT
CRYPTO@TANCRE DE ASRAA@GOOGLE COM
PHILLIPP SCHOPPMANN GOOGLE
SCHOPPMANN@GOOGLE COM SARVAR PATEL
G: "Communication-Computation Trade-offs in
PIR", 14 September 2021 (2021-09-14), pages 1 -
19, XP061062703, Retrieved from the Internet
<URL:http://www.usenix.org/system/files/
sec21-ali.pdf>**

## Description

CROSS-REFERENCE TO RELATED APPLICATION

This application clams the benefit of U.S. Provisional Application No. 63/324,498, filed March 28, 2022.

BACKGROUND

"Private set intersection," or "PSI," refers to a computer-implemented protocol that allows one or both of two parties to determine the intersection of a first set associated with the first party and a second set associated with the second party. The protocol is designed such that one party (or both parties, depending on the protocol) can learn the intersection without learning any elements of the other party's set that are not in the intersection. For instance, in the context of contact-tracing to control spread of a virus, it may be desirable to determine whether any persons with whom an individual has had recent contact is in a database of known infected persons maintained by a public health authority, without the individual learning anything else about the database and without the public health authority learning anything else about the individual's contacts. As another example, in the context of subscribers to (or registered users of) an online service, it may be desirable for one subscriber or the service (or both) to learn which of the subscriber's friends or colleagues are also subscribers to the service. One known approach to PSI involves the parties exchanging versions of the elements that have been effectively encrypted (e.g., using decisional Diffie-Hellmann, or DDH, techniques) such that the receiving party cannot decrypt the elements but can compare them to correspondingly-encrypted versions of elements in the receiving party's own set to detect matches. In this manner, the receiving party can determine the intersection without learning any members of the other party's set that are not in the intersection.

Conventional algorithms for PSI are not well adapted for situations where the sets are of disparate sizes. For instance, an individual may have contacts numbering in the tens or hundreds while a large service provider may have millions of subscribers. In conventional PSI algorithms, the parties exchange encrypted representations of their sets, which may be padded with additional elements to make both sets of equal size, meaning that both sets need to be at least the size of the larger set. Computation cost may scale quasi-linearly with the number of elements in the larger set, and communication cost may scale linearly with the number of elements in the larger set.

Document US10635824B1, document DANIEL DEMMLER ET AL: "PIR-PSI: Scaling Private Contact Discovery", IACR, INTERNATIONAL ASSOCIATION FOR CRYPTOLOGIC RESEARCH, vol. 20180606:185648 6 June 2018, pages 1-28, XP061025891 and document "Communication-Computation Trade-offs in PIR", USENIX, USENIX, THE ADVANCED COMPUTING SYSTEMS ASSOCIATION, 14 September 2021, pages 1-19, XP061062703 disclose various techniques relating to private set intersection, private set union, and private information retrieval in client-server systems.

SUMMARY

The present invention is directed to subject-matter as disclosed by the appended claims.

Certain embodiments disclosed herein relate to private set intersection (PSI) protocols that can reduce the computational and/or communication costs of performing PSI on datasets of disparate sizes (also referred to as "unbalanced" datasets), while preserving the property that neither party learns any elements of the other party's set that are not included in the intersection. In some embodiments, the party with the larger set (referred to for convenience as a "server") can compute an array, such as an inverted Bloom filter or cuckoo hash table, that represents the content of the server set. The party with the smaller set (referred to for convenience as a "client") can query the array, e.g., using a private information retrieval (PIR) protocol, to obtain information that enables the client to determine whether a particular element of the client's set is also in the server's set. By repeating the query for each element of the client's set, the client can learn the intersection. In some embodiments, the client learns no information about the server's set other than the elements that are in the intersection while the server learns no information about the client's set.

Certain embodiments relate to a method that can be performed by a server computer system. The server computer can prepare, based on a server dataset having a number of elements, an array having some number of array locations. Preparing the array can include, for each element in the server data set: computing a set of hash values using a set of hash functions; and updating one or more of the array locations based on the hash values. The server computer can receive, from a client computer system, using a private information retrieval (PIR) protocol, a request to retrieve data from a number of array locations corresponding to a number of encrypted hash values corresponding to an element of a client dataset. Using the PIR protocol, the server computer can compute a PIR response based on the array and the encrypted hash values and transmit the PIR response to the client computer system, without the server computer system learning which array locations had data retrieved. The PIR response can be usable by the client computer system to determine whether the element of the client dataset is also in the server dataset, without the client computer system learning other information about the server dataset. In some embodiments, the PIR protocol can support batch requests, and all of the encrypted hash values corresponding to the element of the client dataset can be requested in a single request.

Various techniques can be used to prepare the array. For example, the array can be populated using cuckoo hashing with at least three hash functions. In some embodiments, the server computer can perform an oblivious pseudorandom function (OPRF) protocol with the client computer system to generate an encrypted element corresponding to the element in the server dataset, wherein the server computer system initiates the OPRF protocol, and the hash values can be computed for the encrypted element. Similarly, prior to receiving the request from the client computer system, the server computer system can perform the OPRF protocol with the client computer system to generate an encrypted element corresponding to an element in the client dataset, wherein the client computer system initiates the OPRF protocol.

Certain embodiments relate to a server computer system that can include: a communication interface configured to communicate with a client computer system; a memory to store a first set that is private to the server computer system; and a processor coupled to the memory. The processor can be configured to prepare, based on a server dataset having a plurality of elements, an array having a plurality of array locations. Preparing the array can include, for each element in the server data set: computing a plurality of hash values using a plurality of hash functions; and updating one or more of the array locations based on the hash values. The processor can be further configure to receive, from a client computer system, using a private information retrieval (PIR) protocol, a request to retrieve data from a number of array locations corresponding to a number of encrypted hash values corresponding to an element of a client dataset. Using the PIR protocol, the processor can compute a PIR response based on the array and the encrypted hash values and transmit the PIR response to the client computer system using the PIR protocol. The PIR response can be usable by the client computer system to determine whether the element of the client dataset is also in the server dataset.

Various techniques can be used to prepare the array. For example, the array can be an inverted Bloom filter for the server dataset. In some embodiments, the PIR protocol can use additive homomorphic encryption and the processor can be further configured such that computing the PIR response includes: retrieving, for each encrypted hash value, an encrypted message representing a value stored in the array location corresponding to the encrypted hash value; and computing a sum of the encrypted messages. In some embodiments, the processor can be further configured such that transmitting the PIR response includes transmitting the sum. In some embodiments, the processor can be further configured such that computing the PIR response further includes computing a product of the sum multiplied by a random scaling factor and transmitting the PIR response includes transmitting the product.

Certain embodiments relate to a method performed by a client computer system. The client computer system can select an element from a client dataset having one or more elements, compute a set of hash values from the element of the client dataset using a set of hash functions. The client computer system can send, to a server computer system, using a private information retrieval (PIR) protocol, a request to retrieve, from an array stored by the server computer system, a number of array elements at locations defined by the set of hash values, wherein the array represents a server dataset. The client computer system can receive, from the server computer system, a PIR response based on the plurality of retrieved array elements. Based on the PIR response, the client computer system can determine whether the element of the client dataset is also in the server dataset. In some embodiments, the only information the client computer system learns about the server data set is whether the element of the client dataset is in the server dataset.

In some embodiments, the PIR protocol can support batch requests, and all of the hash values computed from the element can be included in a single request.

In some embodiments, the array stored by the server computer system can be an inverted Bloom filter, and the PIR response can include a plurality of encrypted Bloom filter values. Where this is the case, determining whether the element of the client dataset is also in the server dataset can include computing a sum of the Bloom filter values, determining that the element of the client dataset is also in the server dataset in the event that the sum is zero, and determining that the element of the client dataset is not in the server dataset in the event that the sum is different from zero.

In some embodiments, the array stored by the server computer system can be an inverted Bloom filter, and the PIR protocol can use additive homomorphic encryption. Where this is the case, the PIR response can include a sum of a plurality of encrypted Bloom filter values retrieved by the server computer system in response to the PIR request. In some embodiments, determining whether the element of the client dataset is also in the server dataset can include determining that the element of the client dataset is also in the server dataset in the event that the sum is zero and determining that the element of the client dataset is not in the server dataset in the event that the sum is different from zero.

In some embodiments, the array stored by the server computer system can be a cuckoo hash table in which the array elements store encrypted versions of the elements of the server dataset, and the PIR response can include a plurality of values representing entries at locations in the cuckoo hash table that correspond to the hash values sent to the server computer system.

In some embodiments, prior to sending the request to the server computer system, the client computer system can perform an oblivious pseudorandom function (OPRF) protocol with the server computer system to generate an encrypted server element corresponding to each element in the server dataset, wherein the server computer system initiates the OPRF protocol. Prior to sending the request to the server computer system, the client computer system can also perform the OPRF protocol with the server computer system to generate an encrypted client element corresponding to the selected element from the client dataset, wherein the client computer system initiates the OPRF protocol, and the hash values can be computed from the encrypted client element.

In some embodiments, the PIR response can include a value that is zero in the event that each of the plurality of hash values matched an entry in an inverted Bloom filter maintained by the server computer system for the server dataset and nonzero in the event that at least one of the plurality of hash values did not match an entry in the inverted Bloom filter.

The following detailed description, together with the accompanying drawings, will provide a better understanding of embodiments of the invention.

BRIEF DESCRIPTION OF THE DRAWINGS

FIG. 1 shows a flow diagram of a process for determining a private set intersection using a Bloom filter according to some embodiments.

FIG. 2 shows a flow diagram of a process for determining a private set intersection using a Bloom filter and a private information retrieval (PIR) protocol according to some embodiments.

FIG. 3 shows a flow diagram of a process for determining a private set intersection using a Bloom filter and a PIR protocol according to some embodiments.

FIG. 4 shows a flow diagram of a process for determining a private set intersection using cuckoo hashing and a PIR protocol according to some embodiments.

TERMS

The following terms may be used herein.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers.

A "client computer" may include a computer system or other electronic device that communicates with a server computer to make requests of the server computer and to receive responses. For example, the client can be a laptop or desktop computer, a mobile phone, a tablet computer, a smart speaker, a smart-home management device, or any other user-operable electronic device.

A "memory" may include suitable device or devices that can store electronic data. A suitable memory may comprise a non-transitory computer readable medium that stores instructions that can be executed by a processor to implement a desired method. Examples of memories may comprise one or more memory chips, semiconductor flash memory, disk drives, etc. Such memories may operate using any suitable electrical, optical, and/or magnetic mode of operation.

A "processor" may include any suitable data computation device or devices. A processor may comprise one or more microprocessors working together to accomplish a desired function. The processor may include a CPU that comprises at least one high-speed data processor adequate to execute program components for executing user and/or system-generated requests. The CPU may be a microprocessor such as AMD's Athlon, Ryzen, and/or EPYC processors; IBM and/or Motorola's PowerPC; IBM's and Sony's Cell processor; Intel's Celeron, Pentium, Xeon, and/or Core processors; and/or other commercially available processor(s).

A "communication device" may include any electronic device that may provide communication capabilities including communication over a mobile phone (wireless) network, wireless data network (e.g., 3G, 4G, or similar networks), Wi-Fi, Wi-Max, wired data network (e.g., Ethernet), or any other communication medium that may provide access to a network such as the Internet or a private network. Examples of communication devices include mobile phones (e.g., cellular phones), PDAs, tablet computers, net books, laptop computers, personal music players, hand-held specialized readers, wearable devices (e.g., watches), vehicles (e.g., cars), etc. A communication device may comprise any suitable hardware and software for performing such functions, and may also include multiple devices or components (e.g., when a device has remote access to a network by tethering to another device-i.e., using the other device as a relay-both devices taken together may be considered a single communication device).

A "set," or "dataset," can refer to a group of data values that represent items of information stored by a computer system. The data values can be represented as binary numbers having some number of digits, which can be a fixed number. A set can include items of a particular type of information, such as contact data (e.g., name, address phone number), location information, account numbers, transaction information, and so on.

An "encryption key" may include any data value or other information suitable to cryptographically encrypt data. A "decryption key" may include any data value or other information suitable to decrypt encrypted data. In some cases, the same key used to encrypt data may also be usable to decrypt the data. Such a key is referred to as a "symmetric encryption key."

The term "public/private key pair" (also referred to as a "key pair") may include a pair of linked cryptographic keys generated by or provided to an entity (e.g., a computer, communication device, or other electronic device) that "owns" the key pair. A public/private key pair may be used with an asymmetric encryption algorithm so that data encrypted using the "public" key of the pair can be decrypted using the "private," or "secret," key of the pair (and vice versa). The public key of a key pair may be provided to other entities and used for public functions such as encrypting a message to be sent to the owner of the key pair or for verifying a digital signature that was purportedly generated by the owner of the key pair. The public key may be authorized or verifiable by a body known as a Certification Authority (CA), which stores the public key in a database and distributes it to any entity that requests it. The private, or secret, key is typically stored in a secure storage medium and known only to the owner of the key pair. It should be understood that some cryptographic systems may provide key recovery mechanisms for recovering lost secret keys and avoiding data loss.

A "shared secret" may include any data value or other information known only to authorized parties in a secure communication. A shared secret can be generated in any suitable manner, from any suitable data. For example, a Diffie-Hellman-based algorithm such as Elliptic-Curve Diffie-Hellman (ECDH) may be used.

"Additively homomorphic encryption" (or "AHE") refers to a public-key encryption scheme (including a key generation function $(pk, sk, ) \leftarrow \mathrm{KeyGen}(1^\lambda)$, encryption function $ct \leftarrow \mathrm{Enc}_{pk}(m; r)$, and decryption function $m/\perp \leftarrow \mathrm{Dec}_{sk}(ct)$ ) over a message space $\mathcal{M}$ that exhibits correctness, CPA security (i.e., security against chosen-plaintext attacks), and linear homomorphism such that $\mathrm{Enc}_{pk}(m_1) \oplus \mathrm{Enc}_{pk}(m_2) = \mathrm{Enc}_{pk}(m_1 + m_2)$ for $\forall m_1, m_2 \in \mathcal{M}$ and $c \odot \mathrm{Enc}_{pk}(m) = \mathrm{Enc}_{pk}(c \cdot m)$ for $\forall c, m \in \mathcal{M}$.

"Fully homomorphic encryption" (or "FHE") refers to a public-key encryption scheme that provides AHE and further provides multiplicative homomorphism such that $\mathrm{Enc}_{pk}(m_1) \otimes \mathrm{Enc}_{pk}(m_2) = \mathrm{Enc}_{pk}(m_1 \cdot m_2)$ for $\forall m_1, m_2 \in \mathcal{M}$.

The "decisional Diffie-Hellman assumption," or "DDH assumption," states that, if $\mathcal{G}$ is a cyclic multiplicative group of prime order $q$ with generator $g$, and if $a, b, c$ are sampled uniformly at random from $\mathbb{Z}_q$, then $(g^a, g^b, g^{ab}) \overset{c}{\approx} (g^a, g^b, g^c)$, where the notation $\overset{c}{\approx}$ indicates that two distributions are computationally indistinguishable.

A "Bloom filter" is an array $B[j]$ of length $|B|$ that represents the outputs of a set of $k$ independent hash functions $h_1(x_i), h_2(x_i), ... h_k(x_i)$ applied to each element $x_i$ in a set $X$. The array length $|B|$ corresponds to the number of possible output values of the hash functions. Each entry in array $B[j]$ can be one bit. To compute a Bloom filter for set $X$, all bits of array $B[j]$ are initialized to the same value, representing an unpopulated state. The value representing the unpopulated state can be 0 for a "standard" Bloom filter or 1 for an "inverted" Bloom filter. For each element $x_i$ in set $X$, the hash values $h_1(x_i), h_2(x_i), ... h_k(x_i)$ are computed, and the corresponding array elements $B[h_1(x_i)], B[h_2(x_i)], ... B[h_k(x_i)]$ are set to the value corresponding to the populated state , which can be 1 for a standard Bloom filter or 0 for an inverted Bloom filter. (If a particular array element is already in the populated state, the array element is not changed.)

"Cuckoo hashing" is a hashing process that assigns a set of some number ($n$) of items into some number ($b$) of bins. The process can be as follows. First, random functions $H_1, H_2, ... , H_k: \{0,1\}^* \to [b]$ are chosen, and empty bins $B[1, ... , b]$ are initialized. To hash an item x, a determination is made as to whether any of the bins $B[H_1(x)], B[H_2(x)], ... , B[H_k(x)]$ are empty. If so, then item $x$ is placed into one of the empty bins and the process terminates. If not, then a random number $i \in \{1, 2, ... , k\}$ is chosen, the item currently in bin $B[H_i(x)]$ is evicted and replaced with item x; then a recursive process is used to insert the evicted item into another bin. If the process does not terminate after a fixed number of iterations, the final evicted item is placed in a special bin called the "stash." The number $k$ of hash functions can be chosen as desired and can be a small integer, such as $k = 3$.

An "oblivious pseudorandom function," or "OPRF," is a two-party protocol for securely computing a pseudorandom function on an input, without revealing the function or the input. A first party (sometimes referred to as the sender or initiator), has an input, which the first party can encrypt and send to the second party (sometimes referred to as the receiver or responder), which can apply a further operation to produce the pseudorandom function output. A number of encryption schemes and further operations can be used. The pseudorandom function can be any function for which the same input produces the same output, different inputs provide different outputs (with probability approaching 1), and for which knowledge of one input and output provides no predictive ability as outputs for other inputs. In one implementation of an OPRF, the sender can encrypt the input by computing a hash function of the input and raising the hash function to a first power that is not known to the recipient. The sender can provide the result to the recipient, which can raise the result to a second power that is not known to the sender. If the hash function is known to both parties, the two parties can compare data items by performing the OPRF and comparing results, without either party learning the other's data item. Embodiments described herein can use any OPRF that creates an encrypted representation of an element, provided that neither party can decrypt elements that were initially encrypted by the other party and provided that each party can obtain corresponding encrypted representations of data elements such that that if two encrypted representations are the same, then it can be assumed that the elements were the same and that if the encrypted representations are different, then it can be assumed that the elements were different.

A "private information retrieval protocol," or "PIR protocol," is a two-party communication protocol that allows a first party to retrieve an item from a database or dataset held by a second party without the second party learning which item was retrieved. The first party can send a PIR request that includes an identifier of the data item (e.g., an index into the database or dataset). The identifier is sent in an encrypted form that the second party is unable to decrypt but is able to use to extract a correspondingly encrypted version of the identified element from the database or dataset, which the second party can return as a PIR response. In some implementations of PIR protocols, the first party learns nothing about the second party's database or dataset other than the item that was retrieved. Examples of PIR protocols include Seal PIR (described in S. Angel et al., "PIR with compressed queries and amortized query processing," available at https://eprint.iacr.org/2017/1142.pdf) and Gentry PIR (described in C. Gentry and S Halevi, "Compressible FHE with Applications to PIR," available at https://eprint.iacr.org/2019/733.pdf). Some PIR protocols may support "batched" queries, in which the first party can send a single request to retrieve multiple data items; examples include multi-query PIR protocols described in J. Groth et al., "Multi-query Computationally-Private Information Retrieval with Constant Communication Rate," in Public Key Cryptography-PKC 2010, https://doi.org/10.1007/978-3-642-13013-7_7.

## DETAILED DESCRIPTION

The following description of exemplary embodiments of the invention is presented for the purpose of illustration and description. It is not intended to be exhaustive or to limit the invention to the precise form described, and persons skilled in the art will appreciate that many modifications and variations are possible. The embodiments have been chosen and described in order to best explain the principles of the invention and its practical applications to thereby enable others skilled in the art to best utilize the invention in various embodiments and with various modifications as are suited to the particular use contemplated.

Certain embodiments disclosed herein relate to protocols for private set intersection ("PSI"). By way of example, scenarios are contemplated in which two parties (which can be computer systems), referred to as P0 and P1, each collect information items that can be represented as elements in a set. The information items might be, for example, identifiers of people or entities (or devices) with which P0 or P1 has had contact or performed a transaction, identifiers of subscribers to a service offered by one or the other party, or the like. It is contemplated that the sets held by P0 and P1 may be of disparate sizes; for instance, the set held by P0 may include on the order of a hundred elements while the set held by P1 may include millions of elements. In some embodiments described herein, a PSI protocol can enable the party that holds the smaller set to determine which information items the two sets have in common without exposing any other information from either party's set to the other party. As one example, P1 may operate an online service that has a large number of subscribers, and P0 may be an individual who wishes to know if any of her personal and/or business contacts are subscribers to P1's service. PSI protocols of the kind described herein can allow P0 to obtain this information (the intersection of the set of P0's contacts with the set of P1's subscribers) without revealing information to P1 and without learning information about any of P1's subscribers who are not contacts of P0.

To facilitate description, the party P0 with the smaller set is referred to herein as the "client," while the party P1 with the larger set is referred to herein as the "server." The client requests information from the server and receives responses that enable the client to determine the intersection of the sets. In some embodiments, the PSI protocol allows the client to learn the intersection but does not learn anything else about the server's set, while the server learns nothing about the client's set. Operations of the client and the server can be implemented using any suitable computer systems.

In some embodiments, a server can construct an inverted Bloom filter that a client can query to determine which elements of the client's set are in the server's set. In various embodiments, different degrees of privacy can be provided.

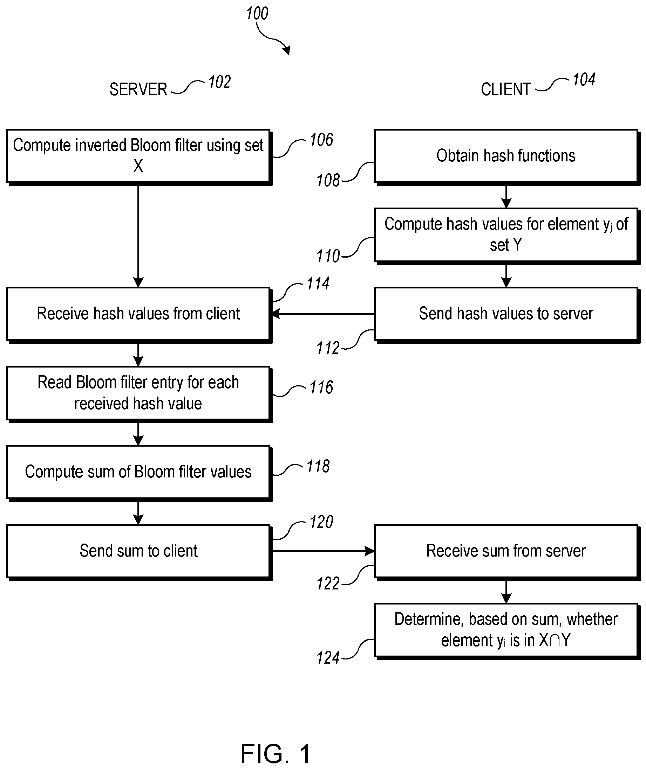

FIG. 1 shows a flow diagram of a process 100 for determining a private set intersection according to some embodiments. Process 100 assumes that a server 102 holds a first set $X$, a client 104 holds a second set $Y$, and it is desirable for the client to learn the intersection $X \cap Y$. At block 106, server 102 can prepare an array representing the content of set $X$ for use in responding to client queries. In this example, server 102 can prepare an "inverted" Bloom filter representing the content of set $X$. To prepare the inverted Bloom filter, server 102 can define a set of independent hash functions $h_1(\cdot)$, $h_2(\cdot)$, ... , $h_k(\cdot)$, for some integer $k$, and an array $B[j]$ of length $|B|$, where $|B|$ is the number of possible output values of the hash functions. Each entry in array $B[j]$ can be one bit. The number $k$ of hash functions can be selected as desired; for instance, $k$ can be 3, 4, 5 or the like. The particular selection of $k$ can depend on the acceptable error rate for a given application. For an inverted Bloom filter, all elements of array $B[j]$ can be initialized to 1. For each

element $x_i$ in set $X$, server 102 can compute $h_1(x_i)$, $h_2(x_i)$, ... $h_k(x_i)$ and set the corresponding array elements $B[h_1(x_i)]$, $B[h_2(x_i)]$, ... $B[h_k(x_i)]$ to 0.

At block 108, client 104 can prepare to query the server. For example, at block 108, client 104 can obtain the hash functions $h_1(\cdot)$, $h_2(\cdot)$, ..., $h_k(\cdot)$ used by the server to prepare the inverted Bloom filter. At block 110, for an element $y_j$ of set $Y$, client 104 can compute hash values $a_1 = h_1(y_j)$, $a_2 = h_2(y_j)$, ..., $a_k = h_k(y_j)$. At block 112, client 104 can send the hash values $a_1$, $a_2$, ... , $a_k$ to server 102.

At block 114, server 102 can receive the hash values from client 104. At block 116, server 102 can read the corresponding Bloom filter entries $B[a_1]$, $B[a_2]$, ... $B[a_k]$. At block 118, server 102 can compute a sum

$$z = \sum_{i=1}^{k} B[a_i]$$

. Where an inverted Bloom filter is used, the sum z is 0 if all of corresponding entries in the Bloom filter are zero, which is the case if all of the hash values $a_1$, $a_2$, ... $a_k$ match results of hashing elements of the server's set $X$. At block 120, server 102 can send the sum $z$ to client 104.

At block 122, client 104 can receive the sum $z$ from server 102. At block 124, client 104 can determine whether the element $y_j$ is in set $X$ based on the sum z. For instance, if the sum z is 0, then client 104 can determine that element $y_j$ is in set $X$; if the sum z is not zero, then client 104 can determine that element $y_j$ is not in set $X$. This simple decision logic is sufficient in cases where the parameters of the inverted Bloom filter are selected such that the possibility of coincidentally matching all k hash values can be ignored. Blocks 110-124 can be repeated for every element $y_j$ in set $Y$, allowing client 104 to determine the intersection $X \cap Y$.

Process 100 allows the client to determine the intersection $X \cap Y$ by executing a query for each element in set $Y$. If $n$ is the number of elements in set $Y$ and $N$ is the number of elements in set $X$, the communication cost for determining the intersection scales as $O(nk)$ and is not dependent on $N$. For $n \ll N$, this compares favorably to the communication cost for conventional PSI protocols, which scales as $O(N)$. The computational cost includes computation of the Bloom filter, which scales as $O(N)$ (but only needs to be performed once), plus the computational cost associated with retrieving entries from an array and computing a sum.

It is noted that process 100 may yield false positives. For instance, there is a nonzero possibility that $h_a(x_i) = h_b(y_j)$ for $x_i \neq y_j$ (where indices $a$ and $b$ might or might not be the same), which can lead to a false positive. The error rate depends on the number $k$ of hash functions, the array size $|B|$, and the number of elements in set $X$. With appropriate design choices (such as making the array large enough that the number of populated entries is below about 50% of the total), the error rate can be kept to an acceptably low level for many applications.

It is also noted that the privacy provided by process 100 is relatively weak. The parties do not learn elements of each other's sets that are not in the intersection, but some information about such elements may be obtained. For instance, server 102 may learn the hash values for elements of client's set $Y$ that are not in set $X$. Likewise, client 104 may learn information about the content of the Bloom filter from queries for elements $y_j$ that are not in set $X$, such as the number of hash values that matched unpopulated entries for a particular query. In some embodiments, privacy on the client side can be enhanced by using a private information retrieval protocol to execute the query.

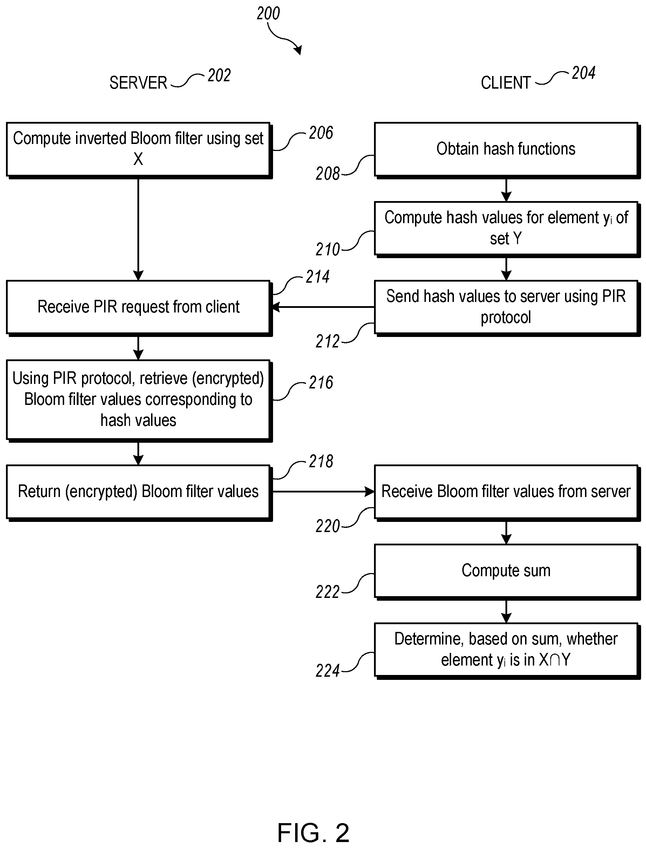

FIG. 2 shows a flow diagram of a process 200 for determining a private set intersection according to some embodiments. Similarly to process 100, process 200 assumes that a server 202 holds a first set $X$, a client 204 holds a second set $Y$, and it is desirable for the client to learn the intersection $X \cap Y$. At block 206, server 202 can prepare an array representing the content of set $X$ for use in responding to client queries. In this example, server 202 can prepare an inverted Bloom filter representing the content of set $X$, in the same manner as at block 106 of process 100.

At block 208, client 204 can prepare to query the server. For example, at block 208, client 204 can obtain the hash functions $h_1(\cdot)$, $h_2(\cdot)$, ..., $h_k(\cdot)$ used by the server to prepare the inverted Bloom filter. At block 210, for an element $y_j$ of set $Y$, client 204 can compute the hash values $a_1 = h_1(y_j)$, $a_2 = h_2(y_j)$, ..., $a_k = h_k(y_j)$. At block 212, client 204 can send each hash value $a_1$, $a_2$, ... , $a_k$ to server 102 using a private information retrieval (PIR) protocol. As used herein, a "PIR protocol" refers to a cryptographic two-party communication protocol that allows one party (the client) to retrieve an element from a data set held by another party (the server) without the server learning which element was retrieved. Numerous examples of PIR protocols are known in the art and may be used. Examples include SealPIR (described in S. Angel et al., "PIR with compressed queries and amortized query processing," available at https://eprint.iacr.org/2017/1142.pdf) and GentryPIR (described in C. Gentry and S Halevi, "Compressible FHE with Applications to PIR," available at https://eprint.iacr.org/2019/733.pdf). Other PIR protocols can also be used. The PIR protocol allows client 204 to query the server's Bloom filter without the server learning which elements of the Bloom filter were queried. Accordingly, at block 212, client can send $k$ PIR requests, one request for each hash value $a_1$, $a_2$, ... , $a_k$.

At block 214, using the PIR protocol, server 202 can receive the PIR request for the element of the Bloom filter array that corresponds to a hash value $a_i$ from client 204. At block 216, within the PIR protocol, server 202 can retrieve the corresponding Bloom filter entry $z_i = B[a_i]$. At block 218, server 202 can return the entries $z_i$ using the PIR protocol. The PIR protocol prevents server 202 from learning the hash value $a_i$ or the retrieved Bloom filter entries $z_i$.

At block 220, client 204 can receive the query result $z_i$ corresponding to each hash value $a_i$ for a given

element $y_j$. In accordance with the PIR protocol, the query result $z_i$ can be in an encrypted form, which client 204 can decrypt. It should be understood that $k$ query/result transactions can be performed for element $y_j$, with each transaction using the PIR protocol. Alternatively, a PIR protocol that supports batched queries can be used (examples are described below), and a single batched query can be used to retrieve the k Bloom filter entries for element $y_j$. At block 222, client 204 can compute the sum $z = \sum_{i=1}^{k} z_i$ . As in process 100, for an inverted Bloom filter the sum z is 0 if all of corresponding entries in the Bloom filter are 0, which is the case if all of the hash values $a_1$, $a_2$, ... $a_k$ match results of hashing elements of the server's set $X$. At block 224, client 204 can determine whether the element $y_j$ is in set $X$ based on the sum z. For instance, if the sum z is 0, then client 204 can determine that element $y_j$ is in set $X$; if the sum z is not zero, then client 204 can determine that element $y_j$ is not in set $X$. Blocks 210-224 can be repeated for every element in set $Y$, allowing client 204 to determine the intersection $X \cap Y$.

In some embodiments, the PIR protocol increases the communication cost relative to process 100, with the particular increase depending on the particular PIR protocol. For SealPIR or GentryPIR, the communication cost scales as $O(nk \log N)$. Again, for $n \ll N$, this compares favorably to the communication cost for conventional PSI protocols, which scales as $O(N)$. The computational cost is similar to the communication cost plus $O(nkN)$.

It is noted that, like process 100, process 200 may yield false positives due to the Bloom filter. As noted above, with appropriate design choices, the error rate can be kept to an acceptable level for many applications.

Process 200 provides improved privacy for the client over process 100, in that the server does not learn the hash values $a_1$, $a_2$, ... $a_k$. In the context of the PIR protocol, the hash values $a_1$, $a_2$, ... $a_k$ are indexes into the Bloom filter array, and the PIR protocol by design prevents the server from learning the indexes or the content of the retrieved Bloom filter entries. The client may learn information about the content of the Bloom filter, such as which hash values mapped to unpopulated entries. In some embodiments, privacy on the server side can be further enhanced by exploiting additive homomorphic encryption (AHE) within a PIR protocol.

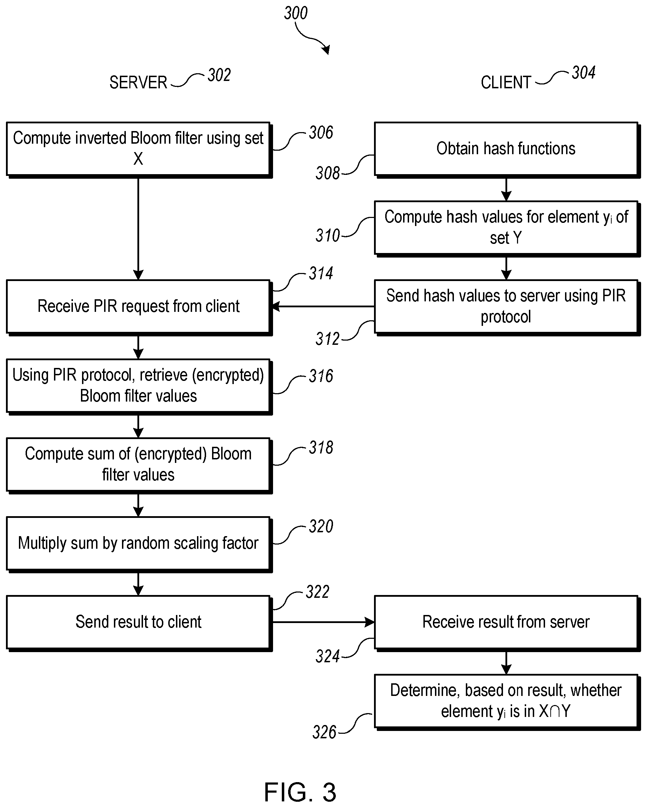

FIG. 3 shows a flow diagram of a process 300 for determining a private set intersection according to some embodiments. Similarly to processes 100 and 200, process 300 assumes that a server 302 holds a first set $X$, a client 304 holds a second set $Y$, and it is desirable for the client to learn the intersection $X \cap Y$. At block 306, server 302 can prepare an array representing the content of set $X$ for use in responding to client queries. In this example, server 302 can prepare an inverted Bloom filter representing the content of set $X$, in the same manner as at block 106 of process 100.

At block 308, client 304 can prepare to query the server. For example, at block 308, client 304 can obtain the hash functions $h_1(\cdot)$, $h_2(\cdot)$, ... , $h_k(\cdot)$ used by the server to prepare the inverted Bloom filter. At block 310, for an element $y_j$ of set $Y$, client 304 can compute hash values $a_1 = h_1(y_j)$, $a_2 = h_2(y_j)$, ... , $a_k = h_k(y_j)$. At block 312, client 304 can send the hash values $a_1$, $a_2$, ... $a_k$ to server 302 using a PIR protocol. Any PIR protocol that provides AHE can be used, including SealPIR or GentryPIR. If desired, each hash value can be sent as a separate PIR request. In some embodiments, a PIR that supports batched queries can be used, such as the multi-query PIR protocol described in J. Groth et al., "Multi-query Computationally-Private Information Retrieval with Constant Communication Rate," in Public Key Cryptography-PKC 2010, https://doi.org/10.1007/978-3-642-13013-7_7. Where batched queries are used, a single PIR request can be used for retrieving entries corresponding to all $k$ of the hash values.

At block 314, using the PIR protocol, server 202 can receive the PIR request(s) for the $k$ hash values from client 304, either in separate requests or as a single batched request At block 316, within the PIR protocol, server 302 can retrieved the corresponding Bloom filter entries $B[a_1]$, $B[a_2]$, ... , $B[a_k]$. The PIR protocol retrieves the Bloom filter entries as encrypted values $b_i = Enc(B[a_i], K)$ where $Enc(m, K)$ is an encryption function that supports AHE and that the server cannot decrypt. At block 318, server 302 can compute a sum $z = \sum_{i=1}^{k} b_i$ , which (as a consequence of AHE) is equal to $Enc\left(\left(\sum_{i=1}^{k} B[a_i]\right), K\right)$. As long as the PIR protocol provides AHE and all $b_i$ are non-negative, the sum $z$ is an encryption of the value 0 if and only if all of the Bloom filter entries $B[a_1]$, $B[a_2]$, ... , $B[a_k]$ are zero. Thus, the sum z provides sufficient information for client 304 to determine whether element $y_j$ is in set $X$. At block 320, server 302 can multiply the sum z by a random (nonzero) scaling factor r to produce a result $z' = r \cdot z$. As a consequence of AHE, the result $z'$ decrypts to 0 if and only if $z$ decrypts to 0. Thus, introducing a random scaling factor (that is not known to the client) preserves the information as to whether $z$ is or is not equal to zero while obscuring any other information about the content of the Bloom filter from the client. At block 322, server 302 can send the result $z'$ to client 304.

At block 324, client 304 can receive the result $z'$ from server 302. At block 324, client 304 can determine whether the element $y_j$ is in set $X$ based on the result $z'$. For instance, if the result $z'$ decrypts to 0, then client 304 can determine that element $y_j$ is in set $X$; if the result $z'$ does not decrypt to 0, then client 304 can determine that element $y_j$ is not in set $X$. Blocks 310-326 can be repeated for every element in set $Y$, allowing client 304 to determine the intersection $X \cap Y$.

In some embodiments, the communication and computational costs for process 300 are similar to those for process 200. Again, for $n \ll N$, this compares favor-

ably to the communication and computational costs for conventional PSI protocols.

It is noted that, like processes 100 and 200, process 300 may yield false positives due to the Bloom filter. As noted above, with appropriate design choices, the error rate can be kept to an acceptable level for many applications.

As with process 200, process 300 can prevent the server from learning the hash values $a_1, a_2, ... , a_k$. In addition, the client does not learn any information other than whether the sum of Bloom filter entries corresponding to a given set of k hash values is or is not equal to zero. Accordingly, a private set intersection can be determined by one party with reduced computational cost and without either party learning information other than the intersection of the sets.

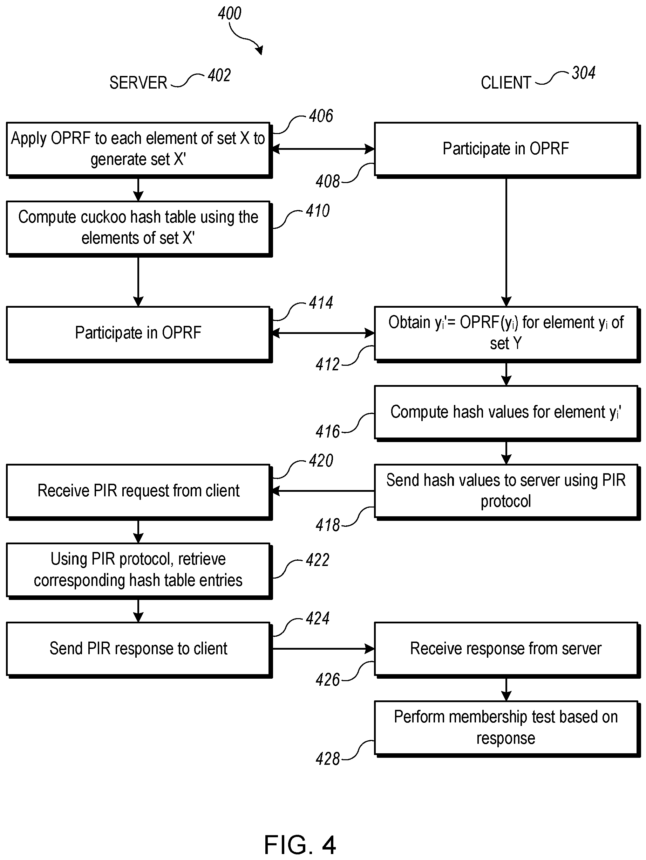

FIG. 4 shows a flow diagram of a process 400 for determining a private set intersection according to some embodiments. Similarly to processes described above, process 400 assumes that a server 402 holds a first set $X$, a client 404 holds a second set $Y$, and it is desirable for the client to learn the intersection $X \cap Y$.

At blocks 406-410, server 402 can prepare an array representing the content of set $X$ for use in responding to client queries. For example, at blocks 406 and 408, server 402 and client 404 can execute an oblivious pseudorandom function (OPRF) protocol, with server 402 as the initiator and client 404 as the responder, to generate an encrypted set $X'$ where each element $x_i'$ in set $X'$ is the result of performing the OPRF protocol for input $x_i \in X$. Any oblivious pseudorandom function $OPRF(K, x)$ can be used, provided that, if $I = X \cap Y$, then for any $x_i \in X \backslash I$, $x_i' = OPRF(K, x_i)$ appears pseudorandom to the client and hence leaks no information about the element $x$. In some embodiments, at block 406, server 402 can apply a hash function $H_0(\cdot)$ to each element $x_i$ and raise the result to a power $K1$ that is not known to client 404. Server 402 can send $H_0(x_i)^{K1}$ to client 404, and at block 408, client 404 can raise $H_0(x_i)^{K1}$ to a power $K2$ that is not known to server 402. Client 404 can send the result $x_i' = H_0(x_i)^{K1K2}$ to server 402. Other OPRF protocols can also be used.

At bock 410, server 402 can compute a cuckoo hash table using the encrypted set $X'$. For example, server 402 can define a set of independent hash functions $H_1, H_2, ..., H_k: \{0,1\}^* \rightarrow [b]$ and can initialize an array of empty bins $B[1, ... , b]$. To hash each element $x_i'$, server 402 can determine whether any of the bins $B[H_1(x_i')]$, $B[H_2(x_i')], ... , B[H_k(x_i')]$ are empty. If so, then element $x_i'$ is placed into one of the empty bins and the process terminates. If not, then a random number $q \in \{1,2, ... , k\}$ is chosen, the item currently in bin $B[H_q(x_i')]$ is evicted and replaced with element $x_i'$; then a recursive process is used to insert the evicted element into another bin. In some embodiments, if the process does not terminate after a fixed number of iterations, the final evicted element can placed in a special bin called the "stash."

Depending on the selection of k (which can be, e.g., 3, 4, 5 or another small integer), the number of iterations of eviction and replacement, and the number of possible hash function outputs, the stash may remain empty with probability approaching 1.

At blocks 412 and 414, client 404 can prepare to query the server. For example, at blocks 412 and 414, client 404 and server 402 can execute the OPRF protocol, with client 404 as the initiator and server 402 as the responder, to generate an encrypted value $y_j' = OPRF(K, y_j)$ corresponding to element $y_j$ of client set $Y$. In some embodiments, client 404 can apply the hash function $H_0(\cdot)$ (the same hash function used by the server at block 406) to element $y_j$ and raise the result to the power $K2$ (the same power used by the client at block 408). Client 404 can send $H_0(y_j)^{K2}$ to sever 402, which can raise $H_0(y_j)^{K2}$ to the power $K1$ (the same power used by the server at block 406). Server 402 can send the result

$$y_j' = H_0(y_j)^{K2K1}$$ to client 404. Other OPRF protocols can also be used. To allow for comparison of encrypted elements, the same OPRF protocol can be implemented at blocks 412-414 and blocks 406-408, with the roles of initiator and responder reversed.

At block 416, client 404 can use the cuckoo hash functions to compute hash values $a_1 = H_1(y_j')$, $a_2 = H_2(y_j'), ..., a_k = H_k(y_j')$ using the encrypted element $y_j'$. At block 418, client 404 can send the hash values $a_1, a_2, ... , a_k$ to server 402 using a PIR protocol. Any PIR protocol that provides AHE can be used, including SealPIR or GentryPIR. Similarly to process 200, each hash value can be sent as a separate PIR query. In some embodiments, a PIR that supports batched queries can be used. Where batched queries are used, a single PIR request can be used to query all k of the hash values.

At block 420, using the PIR protocol, server 402 can receive the hash values from client 404, either in separate queries or as a single batched query. At block 422, within the PIR protocol, server 402 can retrieve the corresponding cuckoo hash table entries $B[a_1], B[a_2], ... , B[a_k]$, without the server learning which entries were retrieved. At block 424, server 402 can send PIR responses $z_1, z_2, ... , z_k$ representing the retrieved entries to client 404.

At block 426, client 404 can receive the retrieved entries from server 404. At block 428, client 404 can perform a membership test based on the response. For instance, using the PIR protocol, client 404 can extract the cuckoo hash table entries $B[a_1], B[a_2], ... , B[a_k]$ from the server's response. The hash table entries are elements of the encrypted set $X'$, and client 404 can compare each of the cuckoo hash table entries $B[a_1], B[a_2], ... , B[a_k]$ to the encrypted element $y_j'$ to detect a match. If one of the cuckoo hash table entries $B[a_1], B[a_2], ... , B[a_k]$ matches the encrypted element $y_j'$, then the unencrypted element $y_j$ is in the intersection $X \cap Y$; if not, then element $y_j$ is not in the intersection. Blocks 412-426 can be repeated for every element $y_j$ in set $Y$, allowing client 404 to determine the intersection $X \cap Y$.

In some embodiments, the communication and computational costs for process 400 are similar to those for processes 200 and 300. Again, for $n \ll N$, this compares favorably to the communication and computational costs for conventional PSI protocols. In some embodiments, the cuckoo hash table can be binned into a number of smaller tables, e.g., using known techniques. This may further improve computational efficiency.

It is noted that process 400 may yield false negatives, which can occur if the element of set $X'$ that matches element $y_j'$ was evicted to the stash. As noted above, with appropriate design choices, the error rate can be kept to an acceptable level for many applications. In some embodiments, process 400 can allow client 404 to execute a separate query to retrieve the stash from server 402 and compare the contents to any elements $y_j'$ for which a match was not found in the cuckoo hash table.

As with processes described above, use of a PIR protocol can prevent the server from learning the hash values $a_1, a_2, \ldots, a_k$. In addition, the client does not learn any information other than the retrieved cuckoo hash table entries. Since the entries contain encrypted data elements $x_i'$, the client can learn whether its encrypted data element $y_j'$ has a match in the cuckoo hash table without learning anything about the elements that do not match element $y_j'$. Accordingly, a private set intersection can be determined by one party with reduced computational and/or communication cost as compared to previous PSI protocols. It is also noted that, while a PSI process similar to process 400 can be implemented using cuckoo hashing with fully homomorphic encryption (FHE), use of a PIR protocol can provide the same privacy with lower computational costs, as FHE algorithms generally incur higher computational costs than PIR protocols that use AHE but not FHE.

PSI protocols of the kind described above allow a client to learn the intersection $X \cap Y$ while the server may learn no information. In some embodiments, parties can repeat the process with roles reversed to enable the server to also learn the intersection. However, it may be more efficient to execute the PSI protocol once so that the client learns the intersection. Once the client has learned the intersection, the client can provide the intersection to the server, e.g., using a secure communication protocol to transmit a list of data elements in $X \cap Y$. The server can thereby learn the intersection without learning any other information about the client's set.

In some embodiments, the client queries the server for each element of the client's set, and this may reveal information about the size of the client's set. If desired, the client can generate additional queries using randomly generated dummy elements to disguise the actual size of the client's set.

The private sets $X$ and $Y$ can include data values representing any type of information that one or both parties may desire to compare to identify overlap. Example use-cases will now be described.

In a first example-use case, a web services provider ("WSP") may have a list of commercial websites maintained by merchants and visited by a user (or by users in some group of users). A financial services provider ("FSP") may have a list of financial transactions performed by the user (or group of users) with various merchants. The WSP may desire to know which websites the user transacted business with, or the FSP may desire to know which of the user's transactions correspond to websites the user visited. In some embodiments, the parties can perform a PSI protocol as described herein. One of the parties (e.g., the WSP) can act as server, with set $X$ corresponding to the list of commercial websites; the other party (e.g., the FSP) can act as client, with set $Y$ corresponding to the list of transactions. In this manner, the WSP only learns about financial transactions associated with websites on its list, or the FSP only learns about websites where the user conducted a financial transaction. As noted above, the party that acts as client in the PSI protocol can provide the intersection to the other party, so that both parties can learn the intersection without learning other information about the other party's set.

In a second-example use case, a user may maintain a list of passwords associated with various network-based accounts. A security service provider may maintain a list of passwords that are known to have been compromised (e.g., based on reported security breaches of various network-based systems). It may be desirable for the user to learn if any of their passwords have been compromised without learning any other information, and it may be desirable for the user not to reveal any passwords to the security service in the process. In some embodiments, a PSI process as described above can be used. The user (or user's device) can act as the client, with set $Y$ corresponding to the user's list of passwords. The security service provider can act as the server, with set $X$ corresponding to the list of compromised passwords. In this manner, the user can learn which, if any, of their passwords have been compromised, without the security service learning any of the user's passwords and without the user learning anything other than which of their passwords have been compromised.

In a third example use-case, a user may have a list of contacts, and a service provider may have a list of subscribers to the service. (As used herein, a "subscriber" can be anyone who maintains an account or other record with the service provider and is not limited to paying subscribers.) It may be desirable for the user and/or the service provider to learn whether any of the user's contacts are also subscribers to the service. In some embodiments, a PSI process as described herein can be used to allow the user to learn whether any of their contacts are subscribers to the service without the service provider learning any information about the user's contacts. The user (or user's device) can act as the client, with set $Y$ corresponding to the user's contact list. The service provider can act as the server, with set $X$ corresponding to the list of subscribers. In this manner, the user can learn whether any of their contacts are subscribers to the service, without the service provider learning any of the user's contacts and without the user learning about subscribers who are not among the user's contacts. As noted above, the user can communicate the intersection to the service provider, thereby allowing the service provider to also learn the intersection.

In a fourth example use-case, two financial institutions such as a bank and a financial services network may each maintain various account records, which may be associated with account identifiers such as a primary account number. It may be desirable for the financial institutions to identify account information held in common. In some embodiments, a PSI process as described herein can be used to allow one institution (or both institutions) to learn the intersection. In some embodiments, the institutions may exchange additional information regarding accounts that are in the intersection of sets.

While the foregoing description makes reference to specific embodiments, those skilled in the art will appreciate that the description is not exhaustive of all embodiments. Many variations and modifications are possible. The semantic meaning of the elements of various sets is not limited to any particular example. For instance, elements of the sets may represent individuals, device identifiers, financial account information (e.g., account numbers), transaction information, location data, and so on, and the intersection of private sets may be determined by or on behalf of individuals, financial institutions, schools, governmental agencies, or other organizations. Techniques described herein can be applied in any context where it is desirable for parties to determine the intersection of two (or more) sets without revealing elements not in the intersection. It should also be understood that embodiments are not limited to actions performed by or on behalf of individuals; the parties can be any systems or services for which identifying data or events held in common may be of interest. Embodiments can also be extended to intersections of more than two sets, in that a party that knows $X \cap Y$ can use PSI techniques as described herein to determine $(X \cap Y) \cap Z$. For instance, a party that learns $X \cap Y$ via a PSI protocol as described above and a party that knows $Z$ can perform a PSI protocol (e.g., as described above) with the first party using $X \cap Y$ as its private set to determine $(X \cap Y) \cap Z$.

Techniques described herein can be implemented by suitable programming of general-purpose computers. In some embodiments, a computer system includes a single computer apparatus, where the subsystems can be components of the computer apparatus. The computer apparatus can have a variety of form factors including, e.g., a smart phone, a tablet computer, a laptop computer, a desktop computer, etc. In other embodiments, a computer system can include multiple computer apparatuses, each being a subsystem, with internal components. PSI techniques of the kind described herein can reduce the computational cost on the computer system in any context where the computer system needs to determine the intersection of a first set of data held by the computer system with a second set of data held by a different computer system without learning elements of the second set that are not in the intersection; this can increase efficiency of the computer system.

A computer system can include a plurality of components or subsystems, e.g., connected together by external interface or by an internal interface. In some embodiments, computer systems, subsystems, or apparatuses can communicate over a network. In such instances, one computer can be considered a client and another computer a server, where each can be part of a same computer system. A client and a server can each include multiple systems, subsystems, or components.

It should be understood that any of the embodiments of the present invention can be implemented in the form of control logic using hardware (e.g., an application specific integrated circuit or field programmable gate array) and/or using computer software with a generally programmable processor in a modular or integrated manner. As used herein a processor includes a single-core processor, multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Rust, Golang, Swift, or scripting language such as Perl or Python using, for example, conventional or object-oriented techniques. The software code may be stored as a series of instructions or commands on a computer readable storage medium; suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable storage medium may be any combination of such storage devices or other storage devices capable of retaining stored data.

Such programs may also be encoded and transmitted using carrier signals adapted for transmission via wired, optical, and/or wireless networks conforming to a variety of protocols, including the Internet. As such, a computer readable transmission medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer or other suitable display for providing any of the results mentioned herein to a user.

Any of the methods described herein may be totally or partially performed with a computer system including one or more processors, which can be configured to perform the steps. Thus, embodiments can involve computer systems configured to perform the steps of any of the methods described herein, potentially with different components performing a respective steps or a respective group of steps. Although presented as numbered steps, steps of methods herein can be performed at a same time or in a different order. Additionally, portions of these steps may be used with portions of other steps from other methods. Also, all or portions of a step may be optional. Additionally, and of the steps of any of the methods can be performed with modules, circuits, or other means for performing these steps.

The specific details of particular embodiments may be combined in any suitable manner without departing from the scope of embodiments of the invention However, other embodiments of the invention may be involve specific embodiments relating to each individual aspect, or specific combinations of these individual aspects.

A recitation of "a", "an" or "the" is intended to mean "one or more" unless specifically indicated to the contrary. The use of "or" is intended to mean an "inclusive or," and not an "exclusive or" unless specifically indicated to the contrary.

The above description is illustrative and is not restrictive. Many variations of the invention will become apparent to those skilled in the art upon review of the disclosure. The scope of patent protection should, therefore, be determined not with reference to the above description, but instead should be determined with reference to the following claims.

## Claims

1. A method performed by a server computer system (302), the method comprising:

   preparing (306), based on a server dataset (X) having a plurality of elements, an array (B) having a plurality of array locations, wherein preparing the array includes, for each element in the server data set:

   computing a plurality of hash values using a plurality of hash functions; and
   updating one or more of the array locations based on the hash values, wherein the array is an inverted Bloom filter for the server dataset;

   receiving (314) from a client computer system (304), using a private information retrieval, PIR, protocol that uses additive homomorphic encryption, a request to retrieve data from a plurality of array locations corresponding to a plurality of hash values that each correspond to an element of a client dataset (Y), wherein the hash values are encrypted as part of the PIR protocol;
   computing (316, 318, 320), using the PIR protocol, a PIR response based on the array and the encrypted hash values, wherein computing the PIR response includes:

   retrieving (316), for each encrypted hash value, an encrypted message representing a value stored in the array location corresponding to the encrypted hash value;
   computing a sum of the encrypted messages; and
   computing a product of the sum multiplied by a random scaling factor; and

   transmitting (322) the PIR response to the client computer system using the PIR protocol, wherein transmitting the PIR response includes transmitting the product, and wherein the PIR response is usable by the client computer system to determine whether the element of the client dataset is also in the server dataset.

2. The method of claim 1 wherein the PIR protocol supports batch requests and wherein all of the encrypted hash values corresponding to the element of the client dataset (Y) are requested in a single request.

3. A server computer system (302) comprising:

   a communication interface configured to communicate with a client computer system (304);
   a memory to store a first set that is private to the server computer system; and
   a processor coupled to the memory and configured to:

   prepare (306), based on a server dataset (X) having a plurality of elements, an array (B) having a plurality of array locations, wherein preparing the array includes, for each element in the server data set:

   computing a plurality of hash values using a plurality of hash functions; and
   updating one or more of the array locations based on the hash values, wherein the array is an inverted Bloom filter for the server dataset;

receive (314) from a client computer system, using a private information retrieval, PIR, protocol that uses additive homomorphic encryption, a request to retrieve data from a plurality of array locations corresponding to a plurality of hash values that each correspond to an element of a client dataset, wherein the hash values are encrypted as part of the PIR protocol; compute (316, 318, 320), using the PIR protocol, a PIR response based on the array and the encrypted hash values, wherein computing the PIR response includes:

retrieving (316), for each encrypted hash value, an encrypted message representing a value stored in the array location corresponding to the encrypted hash value; computing a sum of the encrypted messages; and computing a product of the sum multiplied by a random scaling factor; and

transmit (322) the PIR response to the client computer system using the PIR protocol, wherein transmitting the PIR response includes transmitting the product, and wherein the PIR response is usable by the client computer system to determine whether the element of the client dataset is also in the server dataset.

4. A method performed by a client computer system (304), the method comprising:

selecting an element from a client dataset (Y) having one or more elements; computing (310) a plurality of hash values from the element of the client dataset using a plurality of hash functions; sending (312) to a server computer system (302), using a private information retrieval, PIR, protocol that uses additive homomorphic encryption, a request to retrieve, from an array (B) stored by the server computer system, a plurality of array elements at locations defined by the plurality of hash values, wherein the array represents a server dataset (X) and is an inverted Bloom filter, and wherein the hash values are encrypted as part of the PIR protocol; receiving (324) from the server computer system, a PIR response based on the plurality of retrieved array elements, wherein the PIR response includes a sum of a plurality of encrypted Bloom filter values retrieved by the server computer system in response to the PIR request; and determining, based on the PIR response, whether the element of the client dataset is also in the server dataset.

5. The method of claim 4, wherein the only information the client computer system (304) learns about the server data set (X) is whether the element of the client dataset (Y) is in the server dataset.

6. The method of claim 4, wherein determining whether the element of the client dataset (Y) is also in the server dataset (X) includes:

determining that the element of the client dataset is also in the server dataset in the event that the sum is zero; and determining that the element of the client dataset is not in the server dataset in the event that the sum is different from zero.

7. The method of claim 4, wherein the PIR response includes a value that is zero in the event that each of the plurality of hash values matched an entry in an inverted Bloom filter maintained by the server computer system (302) for the server dataset (X) and nonzero in the event that at least one of the plurality of hash values did not match an entry in the inverted Bloom filter.

**Patentansprüche**

1. Verfahren, das von einem Server-Computersystem (302) durchgeführt wird, das Verfahren umfassend: Vorbereiten (306), basierend auf einem Server-Datensatz (X) mit einer Mehrzahl von Elementen, eines Arrays (B), das eine Mehrzahl von Array-Positionen umfasst, wobei das Vorbereiten des Arrays für jedes Element in dem Server-Datensatz umfasst:

Berechnen einer Mehrzahl von Hash-Werten unter Verwendung einer Mehrzahl von Hash-Funktionen; und Aktualisieren einer oder mehrerer der Array-Positionen basierend auf den Hash-Werten, wobei das Array ein invertierter Bloom-Filter für den Server-Datensatz ist; Empfangen (314) von einem Client-Computersystem (304), unter Verwendung eines Private-Information-Retrieval(PIR)-Protokolls, das additive homomorphe Verschlüsselung verwendet, einer Anforderung zum Abrufen von Daten von einer Mehrzahl von Array-Positionen, die einer Mehrzahl von Hash-Werten entsprechen, die jeweils einem Element eines Client-Datensatzes (Y) entsprechen, wobei die Hash-Werte als Teil des PIR-Protokolls verschlüsselt sind; Berechnen (316, 318, 320), unter Verwendung des PIR-Protokolls, einer PIR-Antwort basierend auf dem Array und den verschlüsselten Hash-Werten, wobei das Berechnen der PIR-Antwort Folgendes umfasst:

Abrufen (316), für jeden verschlüsselten Hash-Wert, einer verschlüsselten Nachricht, die einen Wert darstellt, der in der Array-Position, die dem verschlüsselten Hash-Wert entspricht, gespeichert ist; Berechnen einer Summe der verschlüsselten Nachrichten; und Berechnen eines Produkts der Summe, multipliziert mit einem zufälligen Skalierungsfaktor; und Übertragen (322) der PIR-Antwort an das Client-Computersystem unter Verwendung des PIR-Protokolls, wobei das Übertragen der PIR-Antwort das Übertragen des Produkts umfasst, und wobei die PIR-Antwort von dem Client-Computersystem verwendbar ist, um zu bestimmen, ob das Element des Client-Datensatzes ebenfalls in dem Server-Datensatz ist.

2. Verfahren nach Anspruch 1, wobei das PIR-Protokoll Stapelanforderungen unterstützt und wobei alle verschlüsselten Hash-Werte, die dem Element des Client-Datensatzes (Y) entsprechen, in einer einzigen Anforderung angefordert werden.

3. Server-Computersystem (302), umfassend:

eine Kommunikationsschnittstelle, die konfiguriert ist, mit einem Client-Computersystem (304) zu kommunizieren; einen Speicher zum Speichern eines ersten Satzes, der für das Server-Computersystem privat ist; und einen Prozessor, der mit dem Speicher gekoppelt und konfiguriert ist zum: Vorbereiten (306), basierend auf einem Server-Datensatz (X) mit einer Mehrzahl von Elementen, eines Arrays (B) mit einer Mehrzahl von Array-Positionen, wobei das Vorbereiten des Arrays für jedes Element in dem Server-Datensatz umfasst:

Berechnen einer Mehrzahl von Hash-Werten unter Verwendung einer Mehrzahl von Hash-Funktionen; und Aktualisieren einer oder mehrerer der Array-Positionen basierend auf den Hash-Werten, wobei das Array ein invertierter Bloom-Filter für den Server-Datensatz ist; Empfangen (314) von einem Client-Computersystem, unter Verwendung eines Private-Information-Retrieval(PIR)-Protokolls, das additive homomorphe Verschlüsselung verwendet, einer Anforderung zum Abrufen von Daten von einer Mehrzahl von Array-Positionen, die einer Mehrzahl von Hash-Werten entsprechen, die jeweils einem Element eines Client-Datensatzes entsprechen, wobei die Hash-Werte als Teil des PIR-Protokolls verschlüsselt sind; Berechnen (316, 318, 320), unter Verwendung des PIR-Protokolls, einer PIR-Antwort basierend auf dem Array und den verschlüsselten Hash-Werten, wobei das Berechnen der PIR-Antwort Folgendes umfasst:

Abrufen (316), für jeden verschlüsselten Hash-Wert, einer verschlüsselten Nachricht, die einen Wert darstellt, der in der Array-Position, die dem verschlüsselten Hash-Wert entspricht, gespeichert ist; Berechnen einer Summe der verschlüsselten Nachrichten; und Berechnen eines Produkts der Summe, multipliziert mit einem zufälligen Skalierungsfaktor; und Übertragen (322) der PIR-Antwort an das Client-Computersystem unter Verwendung des PIR-Protokolls, wobei das Übertragen der PIR-Antwort das Übertragen des Produkts umfasst, und wobei die PIR-Antwort von dem Client-Computersystem verwendbar ist, um zu bestimmen, ob das Element des Client-Datensatzes ebenfalls in dem Server-Datensatz ist.

4. Verfahren, das von einem Client-Computersystem (304) durchgeführt wird, das Verfahren umfassend:

Auswählen eines Elements aus einem Client-Datensatz (Y), der ein oder mehrere Elemente aufweist; Berechnen (310) einer Mehrzahl von Hash-Werten aus dem Element des Client-Datensatzes unter Verwendung einer Mehrzahl von Hash-Funktionen; Senden (312) an ein Server-Computersystem (302) unter Verwendung eines Private-Information-Retrieval(PIR)-Protokolls, das additive homomorphe Verschlüsselung verwendet, einer Anforderung zum Anfordern, von einem Array (B), das von dem Server-Computersystem gespeichert wird, einer Mehrzahl von Array-Elementen an Positionen, die durch die Mehrzahl von Hash-Werten definiert sind, wobei das Array einen Server-Datensatz (X) darstellt und ein invertierter Bloom-Filter ist, und wobei die Hash-Werte als Teil des PIR-Protokolls verschlüsselt sind;

Empfangen (324) einer PIR-Antwort von dem Server-Computersystem basierend auf der Mehrzahl von abgerufenen Array-Elementen, wobei die PIR-Antwort eine Summe einer Mehrzahl von verschlüsselten Bloom-Filterwerten umfasst, die von dem Server-Computersystem als Reaktion auf die PIR-Anforderung abgerufen werden; und

Bestimmen, basierend auf der PIR-Antwort, ob das Element des Client-Datensatzes ebenfalls in dem Server-Datensatz ist.

5. Verfahren nach Anspruch 4, wobei die einzige Information, die das Client-Computersystem (304) über den Server-Datensatz (X) erfährt, ist, ob das Element des Client-Datensatzes (Y) in dem Server-Datensatz ist.

6. Verfahren nach Anspruch 4, wobei das Bestimmen, ob das Element des Client-Datensatzes (Y) ebenfalls in dem Server-Datensatz (X) ist, Folgendes umfasst:

Bestimmen, dass das Element des Client-Datensatzes ebenfalls in dem Server-Datensatz ist, falls die Summe Null ist; und

Bestimmen, dass das Element des Client-Datensatzes nicht in dem Server-Datensatz ist, falls die Summe von Null abweicht.

7. Verfahren nach Anspruch 4, wobei die PIR-Antwort einen Wert umfasst, der Null ist, falls jeder der Mehrzahl von Hash-Werten mit einem Eintrag in einem invertierten Bloom-Filter, der durch das Server-Computersystem (302) für den Server-Datensatz (X) beibehalten wurde, übereingestimmt hat und von Null abweicht, falls mindestens einer der Mehrzahl von Hash-Werten nicht mit einem Eintrag in dem invertierten Bloom-Filter übereingestimmt hat.

**Revendications**

1. Procédé réalisé par un système informatique serveur (302), le procédé comprenant :

la préparation (306), sur la base d'un ensemble de données de serveur (X) ayant une pluralité d'éléments, d'un tableau (B) ayant une pluralité d'emplacements de tableau, dans lequel la préparation du tableau comprend, pour chaque élément dans l'ensemble de données de serveur :

le calcul d'une pluralité de valeurs de hachage en utilisant une pluralité de fonctions de hachage ; et

la mise à jour d'un ou plusieurs des emplacements du tableau sur la base des valeurs de hachage, dans lequel le tableau est un filtre de Bloom inversé pour l'ensemble de données de serveur ;

la réception (314) à partir d'un système informatique client (304), en utilisant un protocole de récupération d'informations privées, PIR, qui utilise un chiffrement homomorphe additif, d'une demande de récupération de données à partir d'une pluralité d'emplacements de tableau correspondant à une pluralité de valeurs de hachage qui correspondent chacune à un élément d'un ensemble de données client (Y), dans lequel les valeurs de hachage sont chiffrées dans le cadre du protocole PIR ;

le calcul (316, 318, 320), en utilisant le protocole PIR, d'une réponse PIR basée sur le tableau et les valeurs de hachage chiffrées, dans lequel le calcul de la réponse PIR comprend :

la récupération (316), pour chaque valeur de hachage chiffrée, d'un message chiffré représentant une valeur stockée dans l'emplacement de tableau correspondant à la valeur de hachage chiffrée ;

le calcul d'une somme des messages chiffrés ; et

le calcul d'un produit de la somme multipliée par un facteur d'échelle aléatoire ; et

la transmission (322) de la réponse PIR au système informatique client en utilisant le protocole PIR, dans lequel la transmission de la réponse PIR comprend la transmission du produit, et dans lequel la réponse PIR est utilisable par le système informatique client pour déterminer si l'élément de l'ensemble de données client est également dans l'ensemble de données serveur.

2. Procédé selon la revendication 1, dans lequel le protocole PIR prend en charge des requêtes par lots et dans lequel toutes les valeurs de hachage chiffrées correspondant à l'élément de l'ensemble de données client (Y) sont demandées dans une requête unique.

3. Système informatique serveur (302) comprenant :

une interface de communication configurée pour communiquer avec un système informatique client (304) ;

une mémoire pour stocker un premier ensemble qui est privé au système informatique serveur ; et un processeur couplé à la mémoire et configuré pour :

préparer (306), sur la base d'un ensemble de données de serveur (X) ayant une pluralité d'éléments, un tableau (B) ayant une pluralité d'emplacements de tableau, dans lequel la préparation du tableau comprend, pour chaque élément dans l'ensemble de données de serveur :

>calculer une pluralité de valeurs de hachage en utilisant une pluralité de fonctions de hachage ; et
>
>mettre à jour un ou plusieurs des emplacements du tableau sur la base des valeurs de hachage, dans lequel le tableau est un filtre de Bloom inversé pour l'ensemble de données de serveur ;

recevoir (314) à partir d'un système informatique client, en utilisant un protocole de récupération d'informations privées, PIR, qui utilise un chiffrement homomorphe additif, une demande de récupération de données à partir d'une pluralité d'emplacements de tableau correspondant à une pluralité de valeurs de hachage qui correspondent chacune à un élément d'un ensemble de données client, dans lequel les valeurs de hachage sont chiffrées dans le cadre du protocole PIR ;

calculer (316, 318, 320), en utilisant le protocole PIR, une réponse PIR basée sur le tableau et les valeurs de hachage chiffrées, dans lequel le calcul de la réponse PIR comprend :

>récupérer (316), pour chaque valeur de hachage chiffrée, un message chiffré représentant une valeur stockée dans l'emplacement de tableau correspondant à la valeur de hachage chiffrée ;
>
>calculer une somme des messages chiffrés ; et
>
>calculer un produit de la somme multipliée par un facteur d'échelle aléatoire ; et
>
>transmettre (322) la réponse PIR au système informatique client en utilisant le protocole PIR, dans lequel la transmission de la réponse PIR comprend la transmission du produit, et dans lequel la réponse PIR est utilisable par le système informatique client pour déterminer si l'élément de l'ensemble de données client est également dans l'ensemble de données serveur.

4. Procédé réalisé par un système informatique client (304), le procédé comprenant :

>la sélection d'un élément à partir d'un ensemble de données client (Y) ayant un ou plusieurs éléments ;
>
>le calcul (310) d'une pluralité de valeurs de hachage à partir de l'élément de l'ensemble de données client en utilisant une pluralité de fonctions de hachage ;
>
>l'envoi (312) à un système informatique serveur (302), en utilisant un protocole de récupération d'informations privées, PIR, qui utilise un chiffrement homomorphe additif, d'une demande de récupération, à partir d'un tableau (B) stocké par le système informatique serveur, d'une pluralité d'éléments de tableau à des emplacements définis par la pluralité de valeurs de hachage, dans lequel le tableau représente un ensemble de données serveur (X) et est un filtre de Bloom inversé, et dans lequel les valeurs de hachage sont chiffrées dans le cadre du protocole PIR ;
>
>la réception (324) à partir du système informatique serveur, d'une réponse PIR basée sur la pluralité d'éléments de tableau récupérés, dans lequel la réponse PIR comprend une somme d'une pluralité de valeurs de filtre de Bloom chiffrées récupérées par le système informatique serveur en réponse à la demande PIR ; et
>
>la détermination, sur la base de la réponse PIR, de savoir si l'élément de l'ensemble de données client est également dans l'ensemble de données serveur.

5. Procédé selon la revendication 4, dans lequel les seules informations que le système informatique client (304) apprend sur l'ensemble de données serveur (X) sont de savoir si l'élément de l'ensemble de données client (Y) est dans l'ensemble de données serveur.

6. Procédé selon la revendication 4, dans lequel la détermination du fait que l'élément de l'ensemble de données client (Y) est également dans l'ensemble de données serveur (X) inclut :

>la détermination que l'élément de l'ensemble de données client est également dans l'ensemble de données serveur dans le cas où la somme est nulle ; et
>
>la détermination que l'élément de l'ensemble de données client n'est pas dans l'ensemble de données serveur dans le cas où la somme n'est pas différente de zéro.

7. Procédé selon la revendication 4, dans lequel la réponse PIR comprend une valeur qui est nulle dans le cas où chacune de la pluralité de valeurs de hachage correspond à une entrée dans un filtre de Bloom inversé maintenu par le système informatique serveur (302) pour l'ensemble de données serveur (X) et non nulle dans le cas où l'au moins une de la pluralité de valeurs de hachage ne correspond pas à une entrée dans le filtre de Bloom inversé.

EP 4 500 800 B1

*100*

SERVER *102*

CLIENT *104*

Compute inverted Bloom filter using set X *106*

Obtain hash functions *108*

Compute hash values for element $y_j$ of set Y *110*

Receive hash values from client *114*

Send hash values to server *112*

Read Bloom filter entry for each received hash value *116*

Compute sum of Bloom filter values *118*

Send sum to client *120*

Receive sum from server *122*

Determine, based on sum, whether element $y_i$ is in $X \cap Y$ *124*

FIG. 1

18

*200*

SERVER ⌇ *202*

CLIENT ⌇ *204*

```
Compute inverted Bloom filter using set     ⌇ 206
X
```

```
208 ⌇     Obtain hash functions
```

```
210 ⌇     Compute hash values for element yᵢ of
           set Y
```

```
214
Receive PIR request from client     ←     Send hash values to server using PIR
                                          protocol
212 ⌇
```

```
Using PIR protocol, retrieve (encrypted)     ⌇ 216
Bloom filter values corresponding to
hash values
```

```
218
Return (encrypted) Bloom filter values     →     Receive Bloom filter values from server
220 ⌇
```

```
222 ⌇     Compute sum
```

```
224 ⌇     Determine, based on sum, whether
          element yᵢ is in X∩Y
```

FIG. 2

300

SERVER ⌇302                                    CLIENT ⌇304

| Compute inverted Bloom filter using set X | ⌇306 |
| 308⌇ | Obtain hash functions |

↓                                              ↓

| 310⌇ | Compute hash values for element $y_i$ of set Y |

↓

| Receive PIR request from client | ⌇314 |
| 312⌇ | Send hash values to server using PIR protocol |

↓

| Using PIR protocol, retrieve (encrypted) Bloom filter values | ⌇316 |

↓

| Compute sum of (encrypted) Bloom filter values | ⌇318 |

↓

| Multiply sum by random scaling factor | ⌇320 |

↓

| Send result to client | ⌇322 |
| 324⌇ | Receive result from server |

↓

| Determine, based on result, whether element $y_i$ is in $X \cap Y$ |
| 326⌇ |

FIG. 3

*400*

SERVER ⟋*402*                                    CLIENT ⟋*304*

```
┌────────────────────────────┐  ⟋406        ┌────────────────────────────┐
│ Apply OPRF to each element │◄──────────► │                            │
│   of set X to              │             │     Participate in OPRF     │
│   generate set X'          │   408⟋      │                            │
└────────────────────────────┘             └────────────────────────────┘
           │                                          │
           ▼                                          │
┌────────────────────────────┐  ⟋410                  │
│ Compute cuckoo hash table  │                        │
│  using the                 │                        │
│  elements of set X'        │                        │
└────────────────────────────┘                        │
           │                                          ▼
           │                          ┌────────────────────────────┐  ⟋414
           ▼                          │                            │
┌────────────────────────────┐◄──────►│ Obtain yᵢ'= OPRF(yᵢ) for   │
│     Participate in OPRF     │        │   element yᵢ of set Y       │
│                            │  412⟋  │                            │
└────────────────────────────┘        └────────────────────────────┘
                                                  │
                                                  ▼
                                      ┌────────────────────────────┐
                                      │ Compute hash values for    │
                                      │   element yᵢ'               │
                                 416⟋ │                            │
                                      └────────────────────────────┘
                                                  │
┌────────────────────────────┐  ⟋420             ▼
│                            │◄──────────┌────────────────────────────┐
│ Receive PIR request from   │          │ Send hash values to server │
│   client                   │          │   using PIR protocol        │
└────────────────────────────┘   418⟋   └────────────────────────────┘
           │
           ▼
┌────────────────────────────┐  ⟋422
│ Using PIR protocol,        │
│   retrieve                 │
│ corresponding hash table   │
│   entries                  │
└────────────────────────────┘
           │
           ▼
┌────────────────────────────┐  ⟋424   ┌────────────────────────────┐
│ Send PIR response to       │────────►│  Receive response from      │
│   client                   │         │    server                   │
└────────────────────────────┘   426⟋  └────────────────────────────┘
                                                  │
                                                  ▼
                                      ┌────────────────────────────┐
                                      │ Perform membership test    │
                                      │   based on                 │
                                      │   response                 │
                                 428⟋ └────────────────────────────┘
```

$y_i' = OPRF(y_i)$

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63324498
- US 10635824 B1

**Non-patent literature cited in the description**

- **DANIEL DEMMLER et al.** PIR-PSI: Scaling Private Contact Discovery. *IACR, INTERNATIONAL ASSOCIATION FOR CRYPTOLOGIC RESEARCH*, 06 June 2018, vol. 20180606 (185648), 1-28
- Communication-Computation Trade-offs in PIR. USENIX. USENIX, THE ADVANCED COMPUTING SYSTEMS ASSOCIATION, 14 September 2021, 1-19
- **S. ANGEL et al.** *PIR with compressed queries and amortized query processing*, https://eprint.iacr.org/2017/1142.pdf
- **C. GENTRY** ; **S HALEVI**. *Compressible FHE with Applications to PIR*, https://eprint.iacr.org/2019/733.pdf
- **J. GROTH et al.** Multi-query Computationally-Private Information Retrieval with Constant Communication Rate. *Public Key Cryptography-PKC*, 2010, https://doi.org/10.1007/978-3-642-13013-7_7